# EUROPEAN PATENT SPECIFICATION

(11) **EP 0 382 529 B1**
(45) Date of publication and mention of the grant of the patent: **12.07.1995**
(21) Application number: 90301338.1
(22) Date of filing: 08.02.1990
(51) Int. Cl.: G06F 12/14, G06F 12/08

(54) **Microprocessor having store buffer**
Mikroprozessor mit Speicherpuffer
Microprocesseur à tampon de mémoire

(30) Priority: 10.02.1989 JP 31914/89
(43) Date of publication of application: 16.08.1990
(73) Proprietor: FUJITSU LIMITED, Kawasaki-shi, Kanagawa 211 (JP)
(72) Inventor: Ohshima, Toshiharu, Kawasaki-shi, Kanagawa 213 (JP)
(74) Representative: Stebbing, Timothy Charles

(56) References cited:
- EP-A- 0 149 392
- US-A- 3 858 182
- PHILIPS TELECOMMUNICATION REVIEW. vol. 46, no. 2, June 1988,HILVERSUM NL pages 13 - 34; KINDERVATER ET AL.: 'Performance of P9X00 processor'

## Description

The present invention generally relates to a microprocessor having a store buffer, and more particularly to a microprocessor in which data is written into an external memory through a store buffer independently of another instruction process.

Recently, there has been considerable activity in the development of a microprocessor having a built-in cache and/or a store buffer, which is provided for reducing the time it takes to access an external memory. Generally, such a microprocessor uses ring information for protecting the contents of the external memory from being damaged. Ring information is provided for each area of the external memory. For example, ring information defines four different levels of '0', '1', '2' and '3', in which ring level '0' is the highest. Ring information is used for discriminating a privileged level of an operating system against a non-privileged level thereof or preventing the contents of the external memory from being mistakenly accessed by a task in a multi-task processing. Ring information on a program which is being processed is represented in a program status word (PSW). For example, when an area of the external memory is accessed by a program (instruction), ring information on that area is compared with the current ring information described in the program status word. For example, when the area to be accessed has ring level '0' and the current ring information represents ring level '2', the access to the area is inhibited.

A microprocessor having a cache memory is known. Such a microprocessor has a mode in which data is written into a cache memory and an external memory at the same time. Generally, it takes a long time to write data into the external memory. It is noted that an instruction cycle in the microprocessor must be stopped until an instruction to write data into the external memory is completed. This deteriorates performance of the microprocessor.

From this viewpoint, a microprocessor having a store buffer in addition to the cache memory has been proposed. In such a microprocessor, when data is written into the external memory, the data and a corresponding address of the external memory are written into the store buffer by an instruction to write data into the external memory issued by a central processing unit (CPU). The execution of this instruction is completed when the address and data are written into the store buffer. Thus, the microprocessor can execute another instruction. On the other hand, when a bus provided between the microprocessor and the external memory becomes available, data is read out from the store buffer and then written into the external memory independently of the execution of another instruction by the CPU.

When an error occurs while the data is being read out from the store buffer and written into the external memory, an exception processing request for processing such an error takes place in asynchronism with a subsequent instruction which is generated after the instruction to write data into the external memory is completed. There is a possibility that a different exception processing request occurs when a subsequent instruction is being executed while the exception processing request for processing the above-mentioned error is being processed. From this point of view, it is necessary to consider priority between these different exception processing requests.

In the case where the microprocessor is designed so that the data write process using the store buffer is independent of another instruction, it is impossible to try to execute the instruction to write data into the external memory again from the beginning thereof when an error occurs while the data is being written into the external memory. This is because the instruction to write data into the external memory is completed when the data and associated address are written into the store buffer. For this reason, when an error is detected while data is being read out from the store buffer and transferred to the external memory, some information is saved in a predetermined area together with the program status word and an instruction address to which the process returns. For example, the above-mentioned information to be saved includes an instruction address of the instruction to write data into the external memory, an operand address, operand data and control information on operand access. After the operating system removes the cause of error, data is read out from the store buffer and written into the external memory in accordance with the information to be saved. The control information on operand access includes an operand size and information whether or not it is necessary to translate a logical (virtual) address into a physical address.

Conventionally, ring information described in the program status word which is saved in the predetermined area, is used when trying to write data into the external memory again after an error occurs. The saved program status word relates to an address to which the process returns. Thus, the saved program status word has ring information indicating a ring level obtained when an instruction which is being processed in the store buffer at the time of detecting an error is completed. This ring level must be maintained until writing data into the external memory is retried. If the ring level is changed, some problems occur when writing data into the external memory is tried again. For example, a data write inhibit area of the external memory may be accessed in error so that the contents of the area are damaged.

For this reason, it is required to provide priority between the exception processes with a limitation. For example, an exception processing request other than an exception process request for processing an error occurring in the store buffer is accepted ahead of the latter exception process. However, when the former exception processing request is handled by the operating system, which generally has the highest ring level, the ring information described in the program status word is changed by information relating to the operating system. Thus the program status word to be saved by the exception process request for processing errors in the store buffer which occurs after the operating system runs, has information relating to the operating system. That is, in the program status word to be saved, no information is left which is obtained when reading out data from the store buffer and writing the same into the external memory.

Alternatively, it is conceivable to accept the exception processing request for processing an error occurring in the store buffer ahead of other exception processing requests. In this case, when an instruction to change ring information in the program status word is generated, the CPU cannot execute this instruction until the store buffer becomes available. For this reason, the microprocessor operates at a decreased processing speed. In addition, when the above-mentioned instruction has a priority level higher than the exception processing request for processing an error occurring in the store buffer, this instruction is not allowed to be processed ahead of the exception processing process. Further, there is a problem. It is now assumed that an instruction has a basic length of two bytes and must have an instruction address having an even number without exception. If a branch instruction indicates an odd number branch address, an associated exception process request occurs. In this exception process, an address of the branch instruction and the inappropriate branch address must be saved. When the exception processing request for processing an error occurring in the store buffer is accepted ahead of the exception processing request for processing the odd number branch address, information relating to the latter request is handled as information about the former request.

As described above, a limitation provided to priority between the different exception processing requests causes various problems.

It is therefore desirable to provide an improved microprocessor having a store buffer in which the aforementioned disadvantages are got rid of.

According to the present invention, there is provided a microprocessor as set forth in accompanying claim 1.

An embodiment of the present invention can provide a microprocessor capable of handling exception (interruption) process requests in accordance with priority therebetween without any limitation.

Reference is made, by way of example, to the accompanying drawings in which:
FIG.1 is a block diagram illustrating an outline of a microprocessor according to a preferred embodiment of the present invention;
FIG.2 is a block diagram illustrating a detailed configuration of the microprocessor according to the preferred embodiment of the present invention shown in FIG.1;
FIG.3 is a diagram illustrating a program status word;
FIG.4 is a diagram illustrating the contents of each word stored in a store buffer shown in FIG.2;
FIG.5 is a diagram illustrating an operation sequence of the microprocessor shown in FIG.2;
FIG.6 is a diagram illustrating a format of information to be saved in an external memory shown in FIG.1 when an exception occurs during a time when the memory is accessed; and
FIG.7 is a diagram illustrating access information on an exception process which is requested when an error occurs while writing data from the store buffer into the external memory.

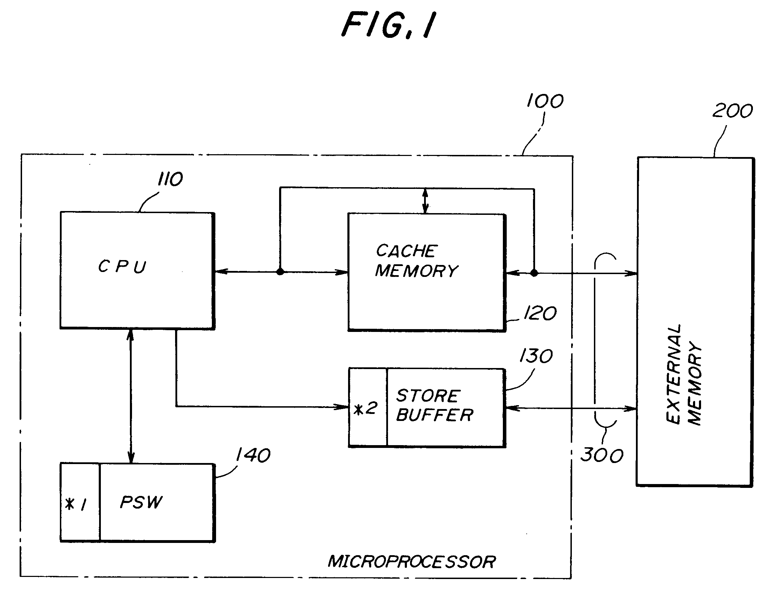

FIG.1 illustrates an outline of a microprocessor according to a preferred embodiment of the present invention. A microprocessor 100 is coupled to an external memory 200 through an external bus 300. The microprocessor 100 includes a central processing unit (CPU) 110, a cache memory 120, a store buffer 130 and a register 140 in a single semiconductor substrate. Data is written into the cache memory 120 and the external memory 200 at the same time. Data and associated information are written into the store buffer 130. The program status word (PSW) is registered in the register 140. As described previously, the program status word (PSW) includes the current ring information indicated by a reference *1 which indicates one of the predetermined ring levels. According to the present invention, ring information (indicated by a reference *2) on the write instruction to write data from the store buffer 130 into the external memory 200 is stored in the store buffer 130 independently of the register 140. When an error occurs while data is being read out from the store buffer 130 and written into the external memory 200, the ring information in the store buffer 130 is saved in the external memory 200. When the cause of the error is eliminated, the ring information saved in the external memory 200 is written into the store buffer 130. Thus, the CPU 110 is free to change the ring information *1 represented in the program status word (PSW) stored in the register 140 without any limitation in order to process a subsequent processing request, or an interruption or exception processing request resulting from a subsequent process. As a result, it is possible for the CPU 110 to execute a subsequent instruction without waiting for the completion of writing data read out the store buffer 130 into the external memory 200. Thus, the microprocessor 100 operates at increased speeds.

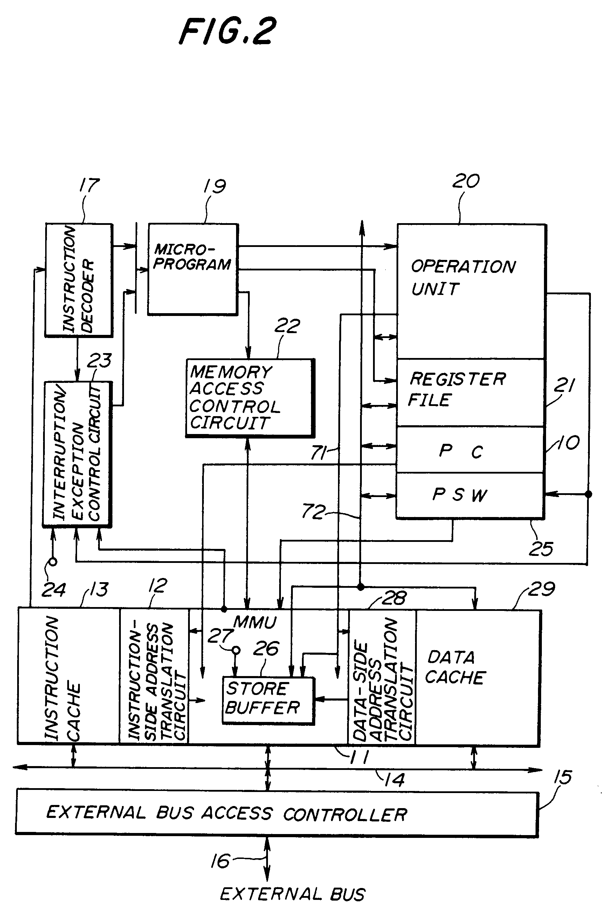

FIG.2 illustrates a detailed configuration of the microprocessor 100 shown in FIG.1. The CPU 110 shown in FIG.1 includes an instruction decoder 17, a microprogram 19, an operation unit 20, a memory access control circuit 22 and an interruption/exception control circuit 23. The cache memory 120 shown in FIG.1 corresponds to the combination of an instruction cache 13 and a data cache 29. The store buffer 130 shown in FIG.1 corresponds to a register 26. The register 140 shown in FIG.1 corresponds to a PSW register 25.

A program counter (PC) 10 has a counter which stores an address of a program being executed. The program counter 10 has an instruction prefetch counter separately from the above-mentioned counter. A program address prefetched by the instruction prefetch counter built in the program counter 10 is supplied to a memory management unit (MMU) 11 and an instruction-side address translation circuit 12. The program address prefetched by the instruction prefetch counter is a logical address, which is converted into a physical address through the instruction-side address translation circuit 12. When the instruction cache 13 does not have an instruction associated with the physical address derived from the instruction-side address translation circuit 12, the memory management unit 11 accesses the external memory 200 (FIG.1) through an internal bus 14, an external bus access controller 15 and the external bus 16. The associated instruction read out from the instruction cache 13 is input to the instruction decoder 17, which decodes the received instruction and generates a corresponding micro-address.

The microprogram 19 receives a micro-address from the instruction decoder 17 and controls the operation of the operation unit 20 and a register file 21 on the basis of the received micro-address. The microprogram 19 has a micro-processing routine to be activated when executing an exception process. The micro-processing routine controls a saving process for transferring the internal status of the microprocessor to the external memory 200 when executing an exception process and a readout process for reading out a specific program status word and a specific program counter value from the external memory 200. The memory access control circuit 22 controls an access request, the direction and size of the access requested. The micro-processing routine associated with the exception process is designated by the micro-address supplied from the interruption/exception control circuit 23. The interruption/exception control circuit 23 is supplied with an external interruption request through a terminal 24, an exception processing request from the instruction decoder 17 to be generated when an unspecified instruction is detected, an exception processing request from the memory management unit 11, such as an address translation exception request or a bus access exception request, and an exception processing request from the operation unit 20, such as a zero-divide exception request. Then the interruption/exception control circuit 23 makes a decision on priority between the exception processing requests, and generates a micro-address relating to a selected one of the exception processing requests.

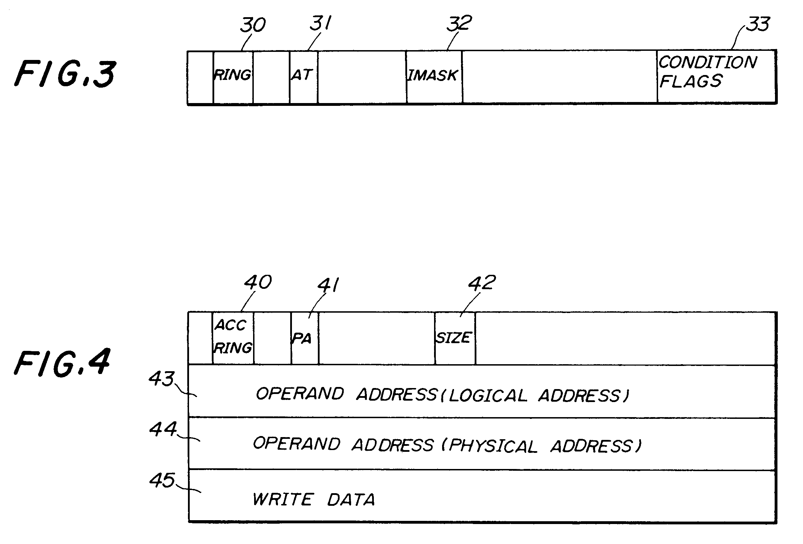

The PSW register 25 relates to a program which is being executed, and has a format shown in FIG.3. The PSW register 25 has ring information (RING) 30, an address translation control mode (AT) 31, an interruption mask (IMASK) 32, and condition flags (CONDITION FLAGS) 33. The ring information 30 defines a ring level of the program being executed by which the right to access the external memory 200 is controlled. The ring information is supplied to the memory management unit 11. The address translation control mode 31 indicates whether or not the address translation from a logical address to a corresponding physical address should be executed. The interruption mask 32 indicates an interruption allowance level. The condition flags 33 are generated from the result of operation by the operation unit 20.

The store buffer 26 built in the memory management unit 11 is supplied with access information from the memory access control circuit 22 and the PSW register 25 through a terminal 27. The store buffer 26 is connected to the operation unit 20 through an operand address bus 71, and is connected to the operation unit 20, the register file 21, the program counter 10, the PSW register 25 and the data cache 29 through a data bus 72.

Each word having a multi-word structure stored in the store buffer 26 has a format shown in FIG.4. Each word includes ring information (ACCRING) 40, a physical address code (PA) 41, a code (RW) indicating the direction in which data is written or read out, an operand size 43, operand addresses 43 and 44, and write data 45. The ring information 40 relates to ring information at the time of accessing. The physical address code 41 indicates that there is no need for executing the address translation. The read/write code 42 indicates the direction of data read/write. The operand address 43 is a logical address, and the operand address 44 is a physical address.

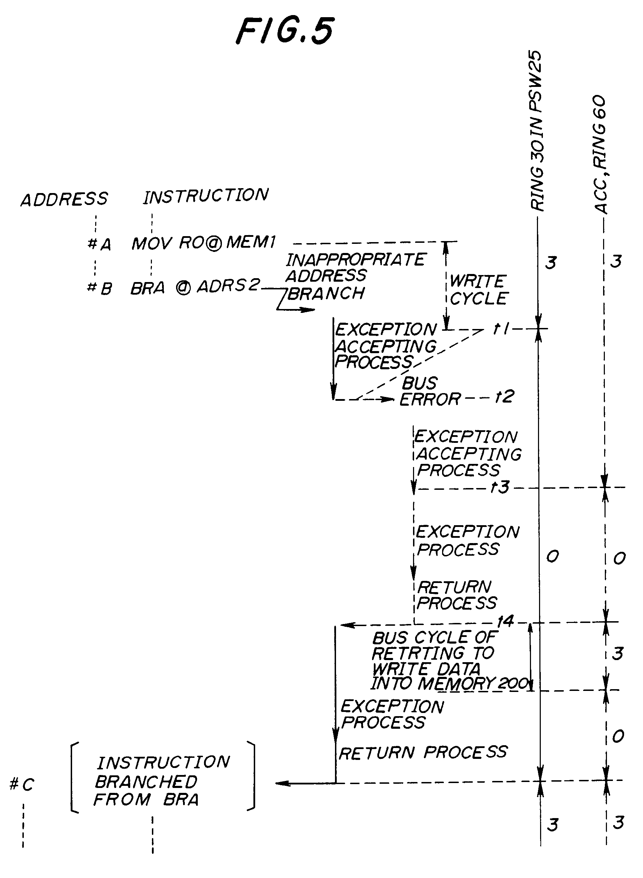

Referring to FIG.5, there is shown a move instruction (MOV) having address #A to move data in a register R0 (not shown) in the register file 21 to the external memory 200. The data in the register R0 is subjected to a data check procedure executed by the operation unit 20, which generates condition flags. Then the data in the register R0 is stored in the write data area 45 of the store buffer 26 (FIG.4). At this time, the current ring information in the PSW register 25 is written into the ring information area 40, and the physical address code (PA) 41, the code indicating the direction of read/write (RW) 42 and the operand size 43 are written into the corresponding areas in the store buffer 26. The move instruction (MOV) is a non-privileged instruction, which has a ring level of '3' when four different ring levels '0', '1', '2' and '3' are provided.

When the aforementioned information is written into the store buffer 26, the memory management unit 11 activates a write processing sequence. When the address translation is requested, a physical address corresponding to logical address @MEM1 of the move instruction is calculated by the data-side address translation circuit 28. Then the obtained physical address makes a write bus cycle active. The program counter 10 determines that the execution of the move instruction is completed when the aforementioned information is written into the store buffer 26. Then the program counter 10 designates the address of a next instruction so that a microprogram of the next instruction is executed.

As shown in FIG.5, a branch instruction (BRA) having address #B is executed and a branch address @ADRS2 is calculated by the operation unit 20. It is assumed that the branch address @ADRS2 must be an even address, nevertheless it is an odd address. In this case, the operation unit 20 generates an exception processing request associated with the occurrence of an inappropriate address branch, and supplies the same to the interruption/exception control circuit 23. When the exception processing request from the operation unit 20 is accepted by the interruption/exception control circuit 23 and then transferred to the microprogram 19, the microprogram 19 executes an exception accepting process by which the program status word (PSW) obtained immediately after the branch instruction BRA is executed as well as the address of the instruction (#B in the illustrated case) from which the exception processing request results are saved in a saving area in the external memory 200. Thereafter, the specific program status word (PSW) and the specific program counter value PC provided for the exception processing program (micro-processing routine) are read out from a predetermined area of the external memory 200 and then written into the PSW register 25 and the program counter 10, respectively. During this operation, the ring information in the PSW register 25 is changed from a ring level of '3' for normal processing to a ring level of '0' which is a privileged (highest) ring level.

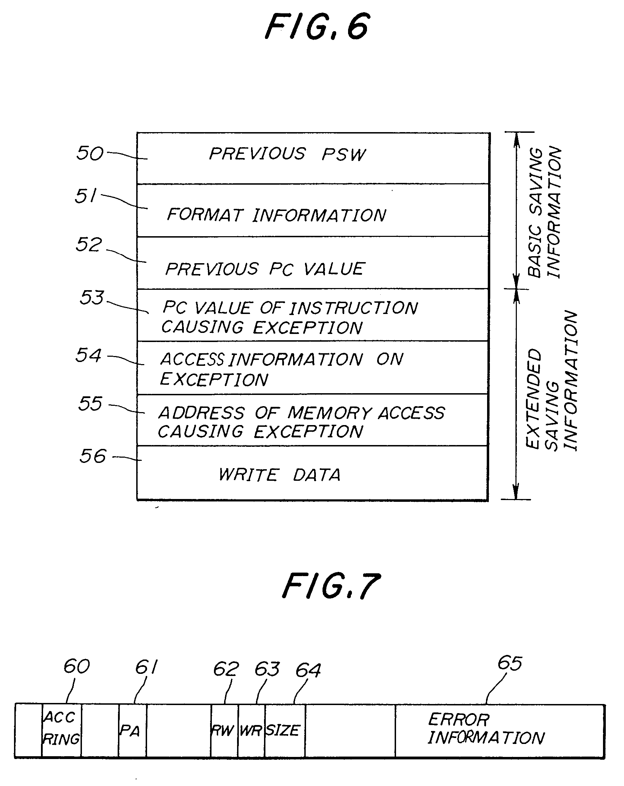

Information to be saved in the saving area of the external memory 200 has a structure shown in FIG.6. The format includes a previous program status word 51 which is the saved program status word, format information 51 indicating a format depending on the type of interruption/exception, and a previous program counter value 52 which is the saved program counter value. The information blocks 51, 52 and 53 form basic saving information. The structure shown in FIG.6 has extended saving information, which includes the program counter value 53 indicating the instruction which causes an exception, access information 54 on the exception about memory access, an address 55 which is a logical address causing the exception, and corresponding write data 56.

The memory access information 54 has a structure shown in FIG.7. As is shown, the memory access information 54 includes ring information (ACCRING) 60 obtained when accessing the external memory 200, a code (PA) 61 indicating that the address translation procedure is not needed, a code (RW) 62 indicating the direction of read/write, a code (WR) 63 instructing a retry to write data in the store buffer 26 into the external memory 200, an operand size (SIZE) 64 and error information (ERROR INFORMATION) 65 on a cause code indicative of the details of the error.

As shown in FIG.5, an exception arising from an bus error (write error) occurring during data writing is detected at time t₁ while the exception accepting process of accepting the exception processing request associated with the inappropriate address branch is being executed. At this time, an exception accepting process of handling an error occurring when data from the stored buffer 26 is being written into the external memory 200 is started from t₂ immediately after the exception accepting process associated with the inappropriate address branch is completed. In the exception accepting process associated with the write error, the following information is written into the predetermined saving areas formed in the external memory 200:
1) A program status word (PSW) obtained at time t₂ when the exception processing request arising from the write error is generated;
2) A program counter value PC obtained at time t₂, that is, an address to which the control returns after the write error exception process is completed, or in other word, an address of an instruction at the beginning of the program of the inappropriate address branch exception process;
3) Address #A of the instruction which causes the exception due to the write error; and
4) The ring information 40, code 41, operand size 42, operand address 43 and write data obtained when the data writing procedure for writing data from the store buffer 26 into the external memory 200 is activated.

After that, the specific program status word (PSW) and the specific program counter value PC provided for the write error exception process are read out from the predetermined area of the external memory 200 and then written into the PSW register 25 and the program counter 10. It is noted that a privileged ring level of '0' relating to the inappropriate address branch exception accepting process is saved in the previous PSW area 50 (FIG.6). On the other hand, a ring level of '3' relating to the exception processing request arising from the write error through the store buffer 26 is saved in the ring information area 60 contained in the access information 54.

When the exception accepting process associated with the write error is completed at time t₃, the corresponding exception process is started, and a return sequence is activated at time t₄ when an instruction to return to the stopped process is executed at the end of the exception process. In the return sequence, the previous program status word (PSW) and the previous program counter value PC are read out from the areas 50 and 52, and then returned to the PSW register 25 and the program counter 10, respectively. Further, the extended saving information shown in FIG.6 is returned to the store buffer 26.

Thereby, the exception process of handling the inappropriate address branch indicated by the program counter 10 is executed from time t₄, and simultaneously the memory management unit 11 retries to read out data from the store buffer 26 and write the same into the external memory 200. It is noted that the ring information used for retrying to write the data into the external memory 200 indicates a ring level of '3' indicated by the ring information 40 which is returned to the store buffer 26 from the predetermined saving area in the external memory 200 independently of a ring level of '0' relating to the exception process of the inappropriate address branch. Thus, when the cause of error is completely eliminated by the exception process executed between t₃ and t₄, it is possible to correctly write data from the store buffer 26 into the external memory 200. Thus, there is no possibility that the contents of the external memory 200 are damaged. Even when the exception process is requested, ring information is available which is obtained when data is first written into the external memory 200 and which is saved in the ring information area 40 of the store buffer 26. Thus, it is possible to retry to write data into the external memory 200 many times.

After the exception process relating to the inappropriate address branch is completed, an instruction having address #C which is branched from the instruction BRA is executed. In a certain case, the instruction branched from the instruction BRA may be aborted.

## Claims

1. A microprocessor coupled to an external memory (200) having a plurality of areas to which is assigned individual ring information for controlling access to said areas, wherein said microprocessor comprises:
executing means (10, 17, 19, 20; 110) for executing a program;
a register (25; 140) storing a program status word (PSW) indicative of a status of said program being executed by said executing means, said program status word including ring information (30) on said program being executed;
a store buffer (26; 130) operatively coupled to said executing means and provided with write data (45) to be written into said external memory and an address (43, 44) of said external memory associated with said write data when said executing means executes a write instruction; and
first control means (11), operatively coupled to said store buffer and said external memory, for reading out said write data and address from said store buffer and writing the same into said external memory independently of executing said program by said executing means;
characterised in that:
said store buffer (26, 130) has a specific area (40) in which ring information (ACC RING) on said write instruction is stored; and in that
said executing means (10, 17, 19, 20; 110) is operable, when an error occurs while data is being read out from the store buffer (26; 130) and written into the external memory (200), to save the ring information (ACC RING) contained in the store buffer into the external memory; and is further operable, after the cause of the error is eliminated, to retry writing with respect to the store buffer using the ring information saved in the external memory.

2. A microprocessor as claimed in claim 1, characterized in that said executing means comprises :
second control means (10, 17, 19, 20; 110), operatively coupled to said register and said external memory, for saving said program status word stored in said register in a first area (50 - 52) of said external memory when an exception concerning an access to said external memory occurs; and
third control means (10, 17, 19, 20; 110), operatively coupled to said store buffer and said external memory, for saving said ring information stored in said store buffer into a second area (53 - 56) of said external memory when said exception occurs.

3. A microprocessor as claimed in claim 2,
characterized in that said program executed by said executing means (10, 17, 19, 20; 110) includes an exception process by which a cause of the occurrence of said exception is eliminated, and in that said second control means comprises means (10, 17, 19, 20; 110) for reading out said program status word from the first area (50 - 52) of said external memory (200) and writing the same into said register when the cause of the occurrence of said exception is eliminated.

4. A microprocessor as claimed in claim 2,
characterized in that said program executed by said executing means (10, 17, 19, 20; 110) includes an exception process by which a cause of the occurrence of said exception is eliminated, and in that said third control means comprises means (10, 17, 19, 20; 110) for reading out said ring information from said second area (53 - 56) of said external memory (200) and writing the same into said specific area of said store buffer when the cause of the occurrence of said exception is eliminated.

5. A microprocessor as claimed in claim 2,
characterized in that said program executed by said executing means (10, 17, 19, 20; 110) includes an exception process by which a cause of the occurrence of said exception is eliminated, and in that:
said second control means (10, 17, 19, 20; 110) comprises means for reading out said program status word from the first area (50 - 52) of said external memory (200) and writing the same into said register when the cause of the occurrence of said exception is eliminated; and said third control means comprises means (10, 17, 19, 20; 110) for reading out said ring information, an associated address and data from said second area (53 - 56) of said external memory and writing the same into said specific area of said store buffer when the cause of the occurrence of said exception is eliminated and retrying to write data into said external memory.

6. A microprocessor as claimed in any of claims 2 to 4, characterized in that said third control means (10, 17, 19, 20; 110) comprises means (10, 17, 19, 20; 110) for saving said write data and said address stored in said store buffer into said second area (53 - 56) of said external memory (200) when said exception occurs.

7. A microprocessor as claimed in any of claims 1 to 5, characterized by further comprising means (10, 17, 19, 20; 110) for stopping said executing means executing said program until a cause of the occurrence of said exception is eliminated.

8. A microprocessor as claimed in any of claims 1 to 6, characterized by further comprising means (10, 17, 19, 20; 110) for stopping said first control means reading out said write data and writing the same into said external memory (200) until a cause of the occurrence of said exception is eliminated.

9. A microprocessor as claimed in any of claims 3 to 7, characterized in that said external memory (200) stores a program of said exception process having a specific program status word having specific ring information, and in that said microprocessor further comprises means (11) for reading out, from said external memory, the program of said exception process to be executed by said executing means and for writing said specific program status word having said specific ring information into said register (25; 140).

10. A microprocessor as claimed in any of claims 4 to 7, characterized in that said external memory (200) stores a program of said exception process having a specific program status word having specific ring information, and in that said microprocessor further comprises means (11) for reading out, from said external memory, the program of said exception process to be executed by said executing means and for writing said specific program status word having said specific ring information into said register (25; 140).

11. A microprocessor as claimed in any of claims 1 to 9, characterized by further comprising a cache memory (13, 29; 120) provided between said executing means (10, 17, 19, 20; 110) and said external memory (200).

12. A microprocessor as claimed in any of claims 1 to 10, characterized in that said executing means (10, 17, 19, 20; 110) comprises an operation unit (20) controlled by a microprogram (19).

13. A microprocessor as claimed in any of claims 1 to 11, characterized in that said address is a logical address, and in that said microprocessor further comprises address translation means (12, 28) for translating said logical address into a physical address, which is supplied to said external memory (200).

14. A microprocessor as claimed in any of claims 1 to 12, characterized in that said ring information includes a plurality of different ring levels, and each of said areas of said external memory (200) is controlled in accordance with a corresponding one of said different ring levels.

15. A microprocessor as claimed in any of claims 5 to 14, characterized in that there is provided priority between a plurality of exception programs, and in that said executing means (10, 17, 19, 20; 110) executes one of said exception processes in sequence of priority.

## Patentansprüche

1. Mikroprozessor, der mit einem externen Speicher (200) gekoppelt ist, der eine Vielzahl von Bereichen hat, welchen einzelne Ringinformationen zur Steuerung des Zugriffs auf die Bereiche zugeordnet sind, welcher Mikroprozessor umfaßt:
eine Ausführungseinrichtung (10, 17, 19, 20; 110) zur Ausführung eines Programms;
ein Register (25; 140), welches ein Programmstatuswort (PSW) speichert, das einen Status des Programms anzeigt, welches durch die Ausführungseinrichtungen ausgeführt wird, welches eine Programmstatuswort-Ringinformation (30) über das Programm, welches ausgeführt wird, einschließt;
einen Pufferspeicher (26; 130), der operativ mit den Ausführungseinrichtungen gekoppelt ist und mit Schreibdaten (45) versehen ist, die in den externen Speicher zu schreiben sind, und einer Adresse (43, 44) des externen Speichers, die den Schreibdaten zugeordnet ist, wenn die Ausführungseinrichtung einen Schreibbefehl ausführt; und
eine erste Steuereinrichtung (11), die operativ mit dem Pufferspeicher und dem externen Speicher gekoppelt ist, zum Auslesen der Schreibdaten und der Adresse aus dem Pufferspeicher und Schreiben derselben in den externen Speicher unabhängig von der Ausführung des Programms durch die Ausführungseinrichtung;
dadurch gekennzeichnet, daß:
der Pufferspeicher (26, 130) einen bestimmten Bereich (40) hat, in welchem eine Ringinformation (ACC RING) über den Schreibbefehl gespeichert ist; und dadurch, daß:
die Ausführungseinrichtung (10, 17, 19, 20; 110) betriebsfähig ist, wenn ein Fehler auftritt, während Daten aus dem Pufferspeicher (26; 130) ausgelesen und in den externen Speicher (200) geschrieben werden, um die Ringinformation (ACC RING), die in dem Pufferspeicher enthalten ist, in dem externen Speicher zu sichern;
und ferner betriebsfähig ist, nachdem die Ursache des Fehlers eliminiert ist, den Schreibvorgang hinsichtlich des Pufferspeichers unter Verwendung der in dem externen Speicher gesicherten Ringinformation erneut zu versuchen.

2. Mikroprozessor nach Anspruch 1, dadurch gekennzeichnet, daß die Ausführungseinrichtung umfasst:
eine zweite Steuereinrichtung (10, 17, 19, 20; 110), die operativ mit dem Register und dem externen Speicher gekoppelt ist, um das in dem Register gespeicherte Programmstatuswort in einem ersten Bereich (50 - 52) des externen Speichers zu sichern, wenn eine Ausnahme betreffend einen Zugriff auf den externen Speicher auftritt; und
eine dritte Steuereinrichtung (10, 17, 19, 20; 110), die operativ mit dem Pufferspeicher und dem externen Speicher gekoppelt ist, um die in dem Pufferspeicher gespeicherte Ringinformation in einem zweiten Bereich (53 - 56) des externen Speichers zu sichern, wenn die Ausnahme auftritt.

3. Mikroprozessor nach Anspruch 2, dadurch gekennzeichnet, daß das durch die Ausführungseinrichtung (10, 17, 19, 20; 110) ausgeführte Programm einen Ausnahmeprozess einschließt, durch welchen eine Ursache des Auftretens der Ausnahme eliminiert wird, und dadurch, daß die zweite Steuereinrichtung eine Einrichtung (10, 17, 19, 20; 110) zum Auslesen des Programmstatusworts aus dem ersten Bereich (50 - 52) des externen Speichers (200) und Schreiben desselben in das Register umfaßt, wenn die Ursache des Auftretens der Ausnahme eliminiert ist.

4. Mikroprozessor nach Anspruch 2, dadurch gekennzeichnet, daß das durch die Ausführungseinrichtung (10, 17, 19, 20; 110) ausgeführte Programm einen Ausnahmeprozess einschließt, durch welchen eine Ursache des Auftretens der Ausnahme eliminiert wird, und dadurch, daß die dritte Steuereinrichtung Einrichtungen (10, 17, 19, 20; 110) zum Auslesen der Ringinformation aus dem zweiten Bereich (53 - 56) des externen Speichers (200) und Schreiben derselben in den bestimmten Bereich des Pufferspeichers umfaßt, wenn die Ursache des Auftretens der Ausnahme eliminiert ist.

5. Mikroprozessor nach Anspruch 2, dadurch gekennzeichnet, daß das durch die Ausführungseinrichtung (10, 17, 19, 20; 110) ausgeführte Programm einen Ausnahmeprozess einschließt, durch welchen eine Ursache des Auftretens der Ausnahme eliminiert wird, und dadurch, daß:
die zweite Steuereinrichtung (10, 17, 19, 20; 110) eine Einrichtung zum Auslesen des Programmstatusworts aus dem ersten Bereich (50 - 52) des externen Speichers (200) und Schreiben desselben in das Register umfaßt, wenn die Ursache des Auftretens der Ausnahme eliminiert ist; und die dritte Steuereinrichtung eine Einrichtung (10, 17, 19, 20; 110) zum Auslesen der Ringinformation, einer zugehörigen Adresse und Daten aus dem zweiten Bereich (53 - 56) des externen Speichers und Schreiben derselben in den bestimmten Bereich des Pufferspeichers, wenn die Ursache des Auftretens der Ausnahme eliminiert ist, und zum erneuten Versuchen des Schreibens von Daten in den externen Speicher umfaßt.

6. Mikroprozessor nach einem der Ansprüche 2 bis 4, dadurch gekennzeichnet, daß die dritte Steuereinrichtung (10, 17, 29, 20; 110) eine Einrichtung (10, 17, 19, 20; 110) zum Sichern der Schreibdaten und der Adresse, die in dem Pufferspeicher gespeichert sind, in den zweiten Bereich (53 - 56) des externen Speichers (200) umfaßt, wenn die Ausnahme auftritt.

7. Mikroprozessor nach einem der Ansprüche 1 bis 5, dadurch gekennzeichnet, daß er ferner eine Einrichtung (10, 17, 19, 20; 110) zum Stoppen der Ausführungseinrichtung, die das Programm ausführt, umfaßt, bis eine Ursache des Auftretens der Ausnahme eliminiert ist.

8. Mikroprozessor nach einem der Ansprüche 1 bis 6, dadurch gekennzeichnet, daß er ferner eine Einrichtung (10, 17, 19, 20; 110) zum Stoppen der ersten Steuereinrichtung, welche die Schreibdaten ausliest und diese in den externen Speicher (200) schreibt, bis eine Ursache des Auftretens der Ausnahme eliminiert ist, umfaßt.

9. Mikroprozessor nach einem der Ansprüche 3 bis 7, dadurch gekennzeichnet, daß der externe Speicher (200) ein Programm des Ausnahmeprozesses speichert, welches ein bestimmtes Programmstatuswort hat, welches eine bestimmte Ringinformation hat, und dadurch, daß der Mikroprozessor ferner eine Einrichtung (11) zum Auslesen aus dem externen Speicher des Programmes des Ausnahmeprozesses, das durch die Ausführungseinrichtung auszuführen ist, und zum Schreiben des bestimmten Programmstatusworts, das die bestimmte Ringinformation hat, in das Register (25; 140) umfaßt.

10. Mikroprozessor nach einem der Ansprüche 4 bis 7, dadurch gekennzeichnet, daß der externe Speicher (200) ein Programm des Ausnahmeprozesses speichert, der ein bestimmtes Programmstatuswort hat, das eine bestimmte Ringinformation hat, und dadurch, daß der Mikroprozessor ferner eine Einrichtung (11) zum Auslesen aus dem externen Speicher des Programms des Ausnahmeprozesses, der durch die Ausführungseinrichtung auszuführen ist, und zum Schreiben des bestimmten Programmstatusworts, das die bestimmte Ringinformation hat, in das Register (25; 140) umfaßt.

11. Mikroprozessor nach einem der Ansprüche 1 bis 9, dadurch gekennzeichnet, daß er ferner einen Cache-Speicher (13, 29; 120) umfaßt, der zwischen der Ausführungseinrichtung (10, 17, 19, 20; 110) und dem externen Speicher (200) vorgesehen ist.

12. Mikroprozessor nach einem der Ansprüche 1 bis 10, dadurch gekennzeichnet, daß die Ausführungseinrichtung (10, 17, 19, 20; 110) eine Operationseinheit (20) umfaßt, die durch ein Mikroprogramm (19) gesteuert ist.

13. Mikroprozessor nach einem der Ansprüche 1 bis 11, dadurch gekennzeichnet, daß die Adresse eine logische Adresse ist, und dadurch, daß der Mikroprozessor ferner eine Adressübersetzungeinrichtung (12, 28) zum Übersetzen der logischen Adresse in eine physische Adresse umfaßt, welche dem externen Speicher (200) zugeführt wird.

14. Mikroprozessor nach einem der Ansprüche 1 bis 12, dadurch gekennzeichnet, daß die Ringinformation eine Vielzahl von verschiedenen Ringebenen umfaßt und jeder der Bereiche des externen Speichers (200) in Übereinstimmung mit einer entsprechenden der verschiedenen Ringebenen gesteuert wird.

15. Mikroprozessor nach einem der Ansprüche 5 bis 14, dadurch gekennzeichnet, daß eine Priorität zwischen einer Vielzahl von Ausnahmeprogrammen vorgesehen ist, und dadurch, daß die Ausführungseinrichtung (10, 17, 19, 20; 110) einen der Ausnahmeprozesse in der Reihenfolge der Priorität ausführt.

## Revendications

1. Microprocesseur relié à une mémoire extérieure (200) ayant une pluralité de zones auxquelles sont affectées des informations individuelles de priorité pour commander l'accès auxdites zones, dans lequel ledit microprocesseur comprend:
- des moyens d'exécution (10, 17, 19, 20; 110) pour exécuter un programme;
- un registre (25; 140) mémorisant un mot d'état de programme (PSW) indicatif d'un état dudit programme exécuté par lesdits moyens d'exécution, ledit mot d'état de programme incluant une information de priorité (30) sur ledit programme éxécuté;
- une mémoire tampon (26; 130) reliée fonctionnellement auxdits moyens d'exécution et recevant des données en écriture (45) à écrire dans ladite mémoire extérieure et une adresse (43, 44) de ladite mémoire extérieure associée auxdites données en écriture lorsque lesdits moyens d'exécution exécutent une instruction d'écriture; et
- des premiers moyens de commande (11) connectés fonctionnellement à ladite mémoire tampon et à ladite mémoire extérieure pour lire lesdites données en écriture et l'adresse d'écriture dans ladite mémoire tampon et écrire celles-ci dans ladite mémoire extérieure, indépendamment de l'exécution dudit programme par lesdits moyens d'exécution,
caractérisé en ce que:
- ladite mémoire tampon (26; 130) a une zone spécifique (40) dans laquelle une information de priorité (ACC RING) sur ladite instruction d'écriture est mémorisée; et en ce que:
- lesdits moyens d'exécution (10, 17, 19, 20; 110) fonctionnent lorsqu'une erreur se produit pendant que les données sont lues dans la mémoire tampon (26; 130) et écrites dans la mémoire extérieure (200), pour sauvegarder l'information de priorité (ACC RING) contenue dans la mémoire tampon dans la mémoire extérieure; et fonctionnent en outre, après que la cause de l'erreur a été éliminée, pour essayer de nouveau d'écrire à partir de la mémoire tampon en utilisant l'information de priorité sauvegardée dans la mémoire extérieure.

2. Microprocesseur selon la revendication 1, caractérisé en ce que lesdits moyens d'exécution comprennent:
- des deuxièmes moyens de commande (10, 17, 19, 20: 110) reliés fonctionnellement audit registre et à ladite mémoire extérieure pour sauvegarder ledit mot d'état de programme mémorisé dans ledit registre dans une première zone (50 à 52) de ladite mémoire extérieure lorsqu'une exception concernant un accès à ladite mémoire extérieure se produit; et
- des troisièmes moyens de commande (10, 17, 19, 20; 110) reliés fonctionnellement à ladite mémoire tampon et à ladite mémoire extérieure pour sauvegarder ladite information de priorité mémorisée dans ladite mémoire tampon dans une deuxième zone (53 à 56) de ladite mémoire extérieure lorsqu'une exception se produit.

3. Microprocesseur selon la revendication 2, caractérisé en ce que ledit programme exécuté par lesdits moyens d'exécution (10, 17, 19, 20; 110) comprend un traitement d'exception par lequel la cause de l'occurrence de ladite exception est éliminée, et en ce que lesdits deuxièmes moyens de commande comprennent des moyens (10, 17, 19, 20; 110) pour lire ledit mot d'état de programme dans la première zone (50 à 52) de ladite mémoire extérieure (200) et écrire celui-ci dans ledit registre lorsque la cause de l'occurrence de ladite exception est éliminée.

4. Microprocesseur selon la revendication 2, caractérisé en ce que ledit programme exécuté par lesdits moyens d'exécution (10, 17, 19, 20; 110) comprend un traitement d'exception par lequel la cause de l'occurrence de ladite exception est éliminée, et en ce que lesdits troisièmes moyens de commande comprennent des moyens (10, 17, 19, 20; 110) pour lire ladite information de priorité dans ladite deuxième zone (53 à 56) de ladite mémoirre extérieure (200) et écrire celle-ci dans ladite zone spécifique de ladite mémoire tampon lorsque la cause de l'occurrence de l'exception est éliminée.

5. Microprocesseur selon la revendication 2, caractérisé en ce que ledit programme exécuté par lesdits moyens d'exécution (10, 17, 19, 20; 110) comprend un traitement d'exception par lequel la cause de l'occurrence de ladite exception est éliminée, et en ce que:
- lesdits deuxièems moyens de commande (10, 17, 19, 20; 110) comprennent des moyens pour lire ledit mot d'état de programme dans ladite première zone (50 à 52) de ladite mémoire extérieure (200) et écrire celui-ci dans ledit registre lorsque la cause de l'occurrence de ladite exception est éliminée; et lesdits troisièmes moyens de commande comprennent des moyens (10, 17, 19, 20; 110) pour lire ladite information de priorité, une adresse associée et des données dans ladite deuxième zone (53 à 56) de ladite mémoire extérieure et écrire celles-ci dans ladite zone spécifique de ladite mémoire tampon lorsque la cause de l'occurrence de ladite exception est éliminée, et essayer de nouveau d'écrire les données dans ladite mémoire extérieure.

6. Microprocesseur selon l'une quelconque des revendications 2 à 4, caractérisé en ce que lesdits troisièmes moyens de commande (10, 17, 19, 20; 110) comprennent des moyens (10, 17, 19, 20; 110) pour sauvegarder lesdites données en écriture et ladite adresse mémorisées dans ladite mémoire tampon dans ladite deuxième zone (53 à 56) de ladite mémoire extérieure (200) lorsque ladite exception se produit.

7. Microprocesseur selon l'une quelconque des revendications 1 à 5, caractérisé en ce qu'il comprend en outre des moyens (10, 17, 19, 20; 110) pour arrêter lesdits moyens d'exécution exécutant ledit programme jusqu'à ce que la cause de l'occurrence de ladite exception soit éliminée.

8. Microprocesseur selon l'une quelconque des revendications 1 à 6, caractérisé en ce qu'il comprend en outre des moyens (10, 17, 19, 20; 110) pour arrêter lesdits premiers moyens de commande lisant lesdites données en écriture et écrivant celles-ci dans ladite mémoire extérieure (200) jusqu'à ce que la cause de l'occurrence de ladite exception soit éliminée.

9. Microprocesseur selon l'une quelconque des revendications 3 à 7, caractérisé en ce que ladite mémoire extérieure (200) mémorise un programme dudit traitement d'exception ayant un mot d'état de programme spécifique ayant une information de priorité spécifique, et en ce que ledit microprocesseur comprend des moyens (11) pour lire dans ladite mémoire extérieure le programme dudit traitement d'exception à exécuter par lesdits moyens d'exécution et pour écrire ledit mot d'état de programme spécifique ayant ladite information de priorité spécifique dans ledit registre (25; 140).

10. Microprocesseur selon l'une quelconque des revendications 4 à 7, caractérisé en ce que ladite mémoire extérieure (200) mémorise un programme dudit traitement d'exception ayant un mot d'état de programme spécifique ayant une information de priorité spécifique, et en ce que ledit microprocesseur comprend en outre des moyens (11) pour lire dans ladite mémoire extérieure le programme dudit traitement d'exception à exécuter par lesdits moyens d'exécution et pour écrire ledit mot d'état de programme spécifique ayant ladite information de priorité spécifique dans ledit registre (25; 140).

11. Microprocesseur selon l'une quelconque des revendications 1 à 9, caractérisé en ce qu'il comprend en outre une mémoire cache (13, 29; 120) prévue entre lesdits moyens d'exécution (10, 17, 19, 20; 110) et ladite mémoire extérieure (200).

12. Microprocesseur selon l'une quelconque des revendications 1 à 10, caractérisé en ce que lesdits moyens d'exécution (10, 17, 19, 20; 110) comprennent une unité d'opérations (20) commandée par un microprogramme (19).

13. Microprocesseur selon l'une quelconque des revendications 1 à 11, caractérisé en ce que ladite adresse est une adresse logique, et en ce que ledit microprocesseur comprend en outre des moyens de translation d'adresse (11, 28) pour translater ladite adresse logique à une adresse physique qui est fournie à ladite mémoire extérieure (200).

14. Microprocesseur selon l'une quelconque des revendications 1 à 12, caractérisé en ce que ladite information de priorité comprend une pluralité de niveaux de priorité différents, et chacune desdites zones de ladite mémoire extérieure (200) est commandée selon un niveau correspondant parmi lesdits niveaux de priorité différents.

15. Microprocesseur selon l'une quelconque des revendications 5 à 14, caractérisé en ce qu'il est prévu une priorité entre une pluralité de programmes de traitement d'exception, et en ce que lesdits moyens d'exécution (10, 17, 19, 20; 110) exécutent un desdits traitements d'exception dans l'ordre de priorité.
